# EUROPÄISCHE PATENTANMELDUNG

(11) **EP 2 072 389 A2**
(43) Veröffentlichungstag der Anmeldung: **24.06.2009**
(21) Anmeldenummer: 08163549.2
(22) Anmeldetag: 03.09.2008
(51) Int. Cl.: B62K 19/30

(54) **Fahrradrahmen mit integrierten Zügen**

(30) Priorität: 18.12.2007 DE 202007017669 U
(71) Anmelder: Rose Versand GmbH, 46395 Bocholt (DE)
(72) Erfinder: Heimerdinger, Andreas, 76597 Loffenau (DE)
(74) Vertreter: Kluin, Jörg-Eden

(57) **Zusammenfassung**

Fahrradrahmen (100), der zumindest im Bereich des Steuerrohrs überwiegend aus Metall gefertigt ist, mit zumindest einem, zumindest teilweise innerhalb des Rahmens verlaufenden Zug (2, 4), wobei zumindest ein Zug (2, 4) durch eine Durchbrechung des Steuerrohrs (10, 10') in den Rahmen (100) eingeführt ist und Position, Form und Größe von Steuerrohr (1) und Gabelschaft (8) so aufeinander abgestimmt sind, dass zwischen ihnen genug Platz (9) für den Zug (2, 4) verbleibt und gefederter Fahrradrahmen (100), mit zumindest einem, zumindest teilweise innerhalb des Rahmens verlaufenden Zug (2, 4), wobei zumindest ein Zug (2, 4) durch eine Durchbrechung (11) durch ein auch der Federung dienendes Element (5) aus dem Rahmen heraus geführt ist.

## Beschreibung

Die Erfindung betrifft in einem ersten Aspekt einen Fahrradrahmen, der zumindest im Bereich des Steuerrohres überwiegend aus Metall gefertigt ist, mit zumindest teilweise innerhalb des Rahmens verlaufenden Zügen. In einem zweiten Aspekt betrifft die Erfindung einen gefederten Fahrradrahmen beliebiger geeigneter Materialzusammensetzung, mit ebenfalls zumindest teilweise innerhalb des Rahmens verlaufenden Zügen. Unter einem Zug soll im Folgenden jede Verbindung zwischen dem Bremsgriff bzw. dem Schaltgriff- oder Hebel mit der Bremse bzw. Schaltung verstanden werden. Lediglich beispielsweise seien Bowdenzüge (Seilzüge) und hydraulische Leitungen genannt. Falls nicht differenziert wird, ist der vollständige Zug, bei einem Seilzug also Seele und Hülle gemeint.

Aus optischen Gründen, aber auch um die Züge zu schützen, ist es wünschenswert, diese möglichst weitereichend innerhalb des Fahrradrahmens zu verlegen. Ebenfalls aus Gründen der Optik und zur Reduzierung der Produktionskosten ist es günstig, wenn zur Unterstützung der Zugführung möglichst wenige extra angebrachte Anbauteile oder Verformungen der Rahmenrohre erforderlich sind.

Es ist aus diesen Gründen vorteilhaft, die Züge bereits an dem Steuerrohr in den Rahmen treten zu lassen. Bei Fahrradrahmen aus faserverstärktem Kunststoff wird dies, wegen der dort größeren Möglichkeiten der Formgebung, teilweise bereits erfolgreich realisiert. Faserverstärkte Kunststoffrahmen sind jedoch in der Herstellung noch sehr teuer und damit nicht für den breiten Markt geeignet.

Es sind auch Fahrradrahmen mit zumindest teilweise innerhalb des Rahmens verlaufenden Zügen bekannt, die vollständig oder zumindest überwiegend (auch im Bereich des Steuerrohrs) aus Metall, meist Aluminium, gefertigt sind. Hierbei werden die Züge durch das Ober- oder Unterrohr in der Nähe des Steuerrohres in den Rahmen eingeführt. Nachteilig ist, dass der Zug hier die Rohrwand mit einem gewissen, von der Richtung dieser Rohrwand abweichenden Winkel durchbrechen muss. In dem Rohr krümmt sich der Zug üblicherweise um etwa diesen Winkel, bis er parallel zu dem Rohr in diesem verläuft. Zumindest bei einem Seilzug erhöht sich durch die Krümmung die in diesem auftretende Reibung. Schon aus diesem Grund tritt der Zug üblicherweise mit einem relativ flachen Winkel in das Ober- oder Unterrohr ein. Um dies zu ermöglichen, muss jedoch die Eintrittsöffnung eine längliche Form annehmen und relativ groß sein. Dies ist zum einem aus Stabilitätsgründen nicht optimal, da die Schwächung des Rohres durch die Öffnung mit deren Größe zunimmt. Zum anderen erfordert es meist relativ aufwendige Ausbuchtungen, andere Verformungen oder Anbauteile zum Zwecke der Zugführung an dem Rahmen, um den Zug in dem relativ großen Loch in dem gewünschten Eintrittswinkel zu fixieren. Ein weiterer Nachteil ist, dass der Zug im Bereich des Steuerrohres noch außerhalb des Rahmens, also relativ ungeschützt verläuft.

Die Erfindung hat es sich zur Aufgabe gemacht, einen Fahrradrahmen zu schaffen, der zumindest im Bereich des Steuerrohrs überwiegend aus Metall gefertigt ist, bei dem die Züge möglichst lange innerhalb des Rahmens geführt sind und zumindest bei der Einführung der Züge in dem vorderen Bereich des Rahmens auf Verformungen oder Anbauteile zum Zwecke der Zugeinführung verzichtet werden kann.

Die Erfindung hat es sich auch zur Aufgabe gemacht, einen gefederten Fahrradrahmen beliebiger Materialzusammensetzung bzw. Materialverteilung zu schaffen, bei dem zumindest bei der Herausführung der Züge aus dem Rahmen in einem weiter hinten angeordneten Bereich des Rahmens auf ausschließlich zur Zugführung angeordnete Anbauteile oder Verformungen der Rahmenrohre verzichtet werden kann.

Diese Aufgabe wird durch die in einem ersten Aspekt in Anspruch 1 und in einem zweiten Aspekt in Anspruch 5 wiedergegebene Erfindung gelöst.

Der gemäß dem ersten Aspekt der Erfindung zumindest im Bereich des Steuerrohrs vorwiegend aus Metall - vorzugsweise Aluminium - gefertigte Fahrradrahmen, weist zumindest einen Zug auf, der durch eine hierfür geschaffene Ausnehmung in dem Steuerrohr in den Rahmen geführt ist.

Damit der Zug in dem Steuerrohr um den Gabelschaft herum in das Oberrohr oder das Unterrohr des Rahmens geführt werden kann, sind Position, Form und Größe von Steuerrohr und Gabelschaft so aufeinander abgestimmt, dass zwischen ihnen genug Platz für den Zug verbleibt.

Hierdurch wird ein Fahrradrahmen geschaffen, der den mindestens einen Zug zumindest im vorderen Bereich des Rahmens frühestmöglich aufnimmt und schützt. Der Zug kann zumindest in diesem Bereich in dem Rahmen völlig gerade verlaufen, wodurch zumindest bei einem Seilzug weniger Reibungsverluste auftreten.

Da zumindest der in dem Oberrohr geführte, mindestens eine Zug - von der Seite des Rahmens aus betrachtet - etwa senkrecht zu der Achse des Steuerrohres in das Steuerrohr eingeführt wird, kann das hierfür erforderliche Loch in dem Steuerrohr kleiner sein, als es bei einer Verlegung durch eine Durchbrechung des Unterrohres oder Oberrohres der Fall wäre.

Vorzugsweise wird der erforderliche Platz zwischen Gabelschaft und Steuerrohr dadurch geschaffen, dass der Innendurchmesser des Steuerrohres um mindestens den doppelten Außendurchmesser des Zuges größer ist, als der Außendurchmesser des Gabelschaftes. Diese Art des Platzschaffens ist besonders einfach und kostengünstig. Es sind keine aufwändig herzustellenden und die Stabilität möglicherweise beeinträchtigenden Ein- oder Ausbuchtungen von Gabelschaft oder Steuerrohr nötig. Der Gabelschaft kann weiterhin zentral im Steuerrohr angeordnet sein. Es können besonders dünne Züge zum Einsatz kommen, um den erforderlichen Platz zwischen Gabelschaft und Steuerrohr zu vermindern.

Um die notwendige Differenz zwischen dem Durchmesser des Gabelschaftes und dem Durchmesser des Steuerrohres möglichst gering zu halten, ist das Loch für den mindestens einen Zug - von vorne auf den Rahmen blickend - möglichst weit außen und vor der dicksten Stelle des Steuerrohres angebracht.

Vorzugsweise weist der erfindungsgemäße Rahmen keine Anbauteile oder Ausformungen oder anderweitige Verformungen auf, die den Zugverlauf im Bereich des Eintritts in das Steuerrohr unterstützen. Überraschender Weise hat sich gezeigt, dass diese bei den erfindungsgemäßen Fahrradrahmen grundsätzlich entbehrlich sind. Hierdurch verringert sich der Fertigungsaufwand. Es kann auf kostspielige, die Herstellung von Verformungen bei Aluminiumrahmen erleichternde Fertigungsmethoden wie hydro-forming oder superplastic-forming verzichtet werden. Zudem verbessert sich die Optik des Fahrradrahmens.

Es kann vorgesehen sein, die Austrittsöffnung des Zuges aus dem Rahmen so auf die Eintrittsöffnung des Zuges am Steuerrohr abzustimmen, dass beide zueinander in der Flucht liegen und sich zwischen ihnen keine Hindernisse befinden. Bei dieser Ausführungsform kann ein Seilzug verwendet werden, der innerhalb des Rahmens ohne Hülle geführt ist. Dies kann eine Verringerung der Reibung des Zuges sowie eine Reduzierung der durch die Komprimierbarkeit der Hülle verursachten Elastizität des Zuges und damit ein direkteres Ansprechen der Bremse oder der Schaltung zur Folge haben. Auch kann dadurch, dass die Hülle wegfällt, der benötigte Abstand zwischen Gabelschaft und Steuerrohr geringer ausfallen. Bei dieser Ausführungsform können Anbauteile oder Verformungen des Rahmens an der Ein- und Austrittsöffnung des Zuges vorgesehen sein, die eine Anschlagsfläche bilden, die senkrecht zu der Achse des Zuges in diesem Bereich steht. Bei dieser Ausführungsform können auch Fertigungsmethoden wie hydro-forming oder superplastic-forming eingesetzt werden.

In der bevorzugten Ausführungsform werden mehrere Züge durch das Steuerrohr in den Rahmen eingeführt und für jeden Zug ist hierfür eine eigene Durchbrechung in dem Steuerrohr vorgesehen. Auf diese Weise können die Öffnungen an der für den weiteren Zugverlauf optimierten Stelle angeordnet werden und auch die Richtung dieser Bohrung kann je nachdem, ob der Zug durch das Oberrohr oder das Unterrohr weiter verläuft, unterschiedlich ausfallen, um zu erreichen, dass der Zug weitestgehend ohne Krümmung in dem Rahmen verläuft.

In der dem zweiten Aspekt der Erfindung entsprechenden Ausführungsform handelt es sich bei dem Fahrradrahmen, der hier aus jedem geeigneten Material/ Materialkombination gefertigt sein kann, um einen gefederten Rahmen mit Elementen wie beispielsweise Anbauteilen oder Verformungen zum Zwecke dieser Federung. Bei dieser Ausführungsform ist zumindest ein Zug durch eine Durchbrechung eines dieser Elemente geführt. Es hat sich gezeigt, dass hierdurch überraschender Weise an der Austrittsöffnung dieses mindestens einen Zuges auf ein ausschließlich der Zugführung dienendes Anbauteil an dem Rahmenrohr oder eine Verformung des Rahmenrohrs, verzichtet werden kann. Dies senkt den Fertigungsaufwand und kommt der Optik des Rahmens zu Gute.

In der besonders bevorzugten Ausführungsform sind in dem auch der Federung dienenden Element speziell zur krümmungsfreien Führung des Zuges/ der Züge entsprechende Hohlräume angeordnet. Auch sind - besonders bevorzugt - an diesem Element zu demselben Zweck Zugherausführungen angeordnet.

Bei der bevorzugten Ausführungsform weist der Rahmen einen Lagerblock als der Federung dienendes Element an der unteren Seite im hinteren Bereich des Oberrohres auf und der mindestens eine Zug ist durch eine Durchbrechung in diesem Lagerblock geführt. Hierdurch ist die Durchbrechung zudem - optisch günstig - weitestgehend vor Verschmutzung verdeckt.

In der besonders bevorzugten Ausführungsform beider Aspekte der Erfindung verlaufen drei Züge wie dargestellt zumindest teilweise innerhalb des Rahmens, wobei zwei Züge auf verschiedenen Seiten des Rahmens in das Steuerrohr eingeführt werden und auf verschiedenen Seiten des Gabelschaftes vorbei in das Oberrohr weiter verlaufen.

Die Erfindung soll nun anhand der beigefügten Zeichnungen weiter erläutert werden. Es zeigen:

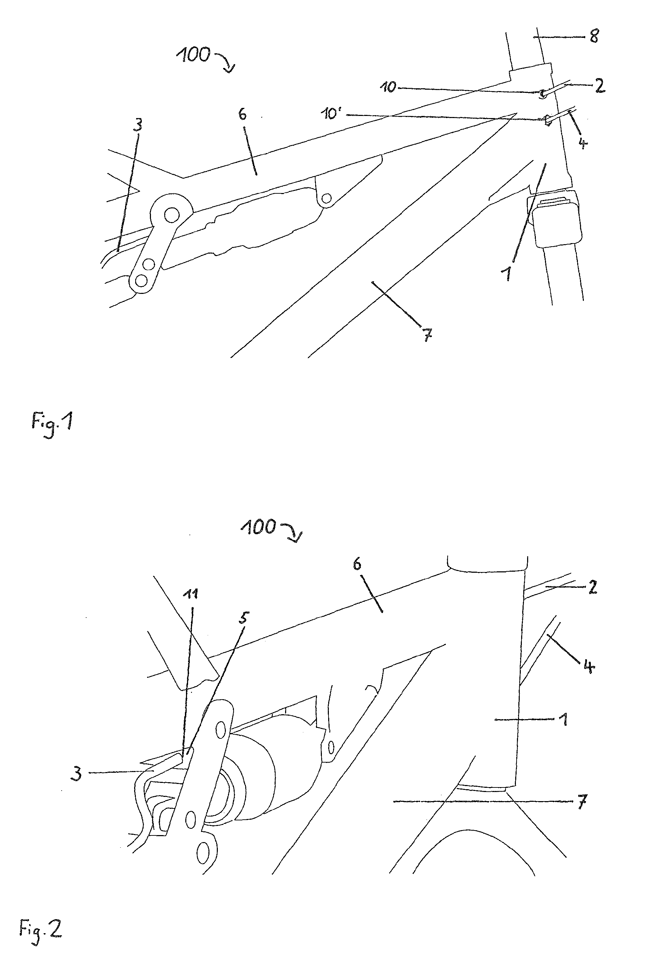

- Fig. 1: eine Seitenansicht eines Teils des erfindungsgemäßen Fahrradrahmens;
- Fig. 2: eine dreidimensionale Seitenansicht von schräg hinten auf einen Teil des erfindungsgemäßen Fahrradrahmens;

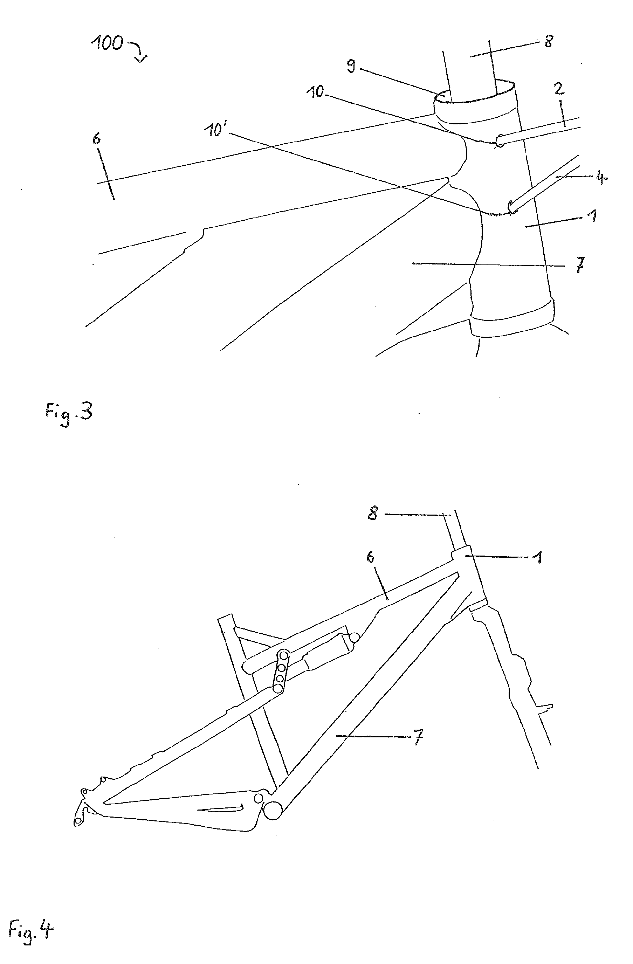

- Fig.3: eine dreidimensionale Seitenansicht auf einen Teil des erfindungsgemäßen Fahrradrahmens von schräg oben;
- Fig. 4: eine Seitenansicht auf einen vollständigen gattungsgemäßen Fahrradrahmen ohne die erfindungsgemäßen Besonderheiten.

In der als Ganzes mit 100 bezeichneten dargestellten Ausführungsform des erfindungsgemäßen Fahrradrahmens verlaufen drei Züge, von denen nur zwei 2, 4, dargestellt sind, teilweise innerhalb des Rahmens.

Gemäß dem ersten Aspekt sind sie durch das Steuerrohr 1 in den Rahmen eingeführt und der Rahmen ist aus Metall, beispielsweise Aluminium gefertigt. Zwei der Züge, von denen nur einer 2 dargestellt ist, durchbrechen das Steuerrohr 1 an einer Stelle, die in der gedachten Verlängerung des Oberrohres 6 liegt und - von vorne auf den Rahmen blickend - vor der dicksten Stelle des Steuerrohres angeordnet ist. Der nicht dargestellte Zug verläuft auf der anderen Seite des Gabelschaftes, als die dargestellten Züge 2, 4. Dieser nicht dargestellte Zug und der Zug 2 durchlaufen auf ihrer jeweiligen Seite in dem Steuerrohr zunächst den zwischen dem Steuerrohr 1 und dem Gabelschaft 8 geschaffenen Raum 9, bevor sie durch das Oberrohr 6 geführt sind. An den Eintrittsöffnungen am Steuerrohr 1 finden sich keine speziell der Zugführung dienende Ausbeulungen oder Einbeulungen des Rahmens oder Anbauteile. Der dritte Zug 4, tritt durch die Öffnung 10', die sich in dem Steuerrohr, von der Stirnseite des Rahmens aus betrachtet ebenfalls vor der dicksten Stelle des Steuerrohres befindet, in den Rahmen. Die Öffnung 10' ist in dem Steuerrohr in der gedachten Verlängerung des Unterrohres 7 angeordnet. Der Zug 4 durchquert in dem Steuerrohr zunächst ebenfalls den zwischen dem Gabelschaft 8 und dem Steuerrohr 1 geschaffenen Raum 9, bevor in dem Unterrohr 7 weiter verläuft und dieses an geeigneter Stelle wieder verlässt. Alle Züge verlaufen von oben auf den Rahmen blickend schon im Steuerrohr parallel zu Ober und Unterrohr. Die Züge verlaufen im Steuerrohr - von vorne auf den Rahmen blickend - möglichst weit außen, tragen also in dem Steuerrohr 1 an keiner Stelle um wesentlich mehr als ihren Durchmesser auf. Alle Züge verlaufen im Wesentlichen ohne Biegung durch das Steuerrohr 1 in das Oberrohr 6 bzw. Unterrohr 7.

Gemäß des zweiten Aspektes der Erfindung ist der Rahmen aus einem beliebigen Material, beispielsweise aus karbonfaserverstärktem Kunststoff gefertigt. Die beiden durch das Oberrohr geführten Züge, von denen nur einer 2 dargestellt ist, treten durch zwei Austrittsöffnungen in dem Lagerblock 5, von denen nur eine 11 dargestellt ist, im hinteren Bereich des Oberrohrs 6 wieder aus dem Rahmen 100 heraus (3). Der Lagerblock 5 weist zur krümmungsfreien Führung der Züge spezielle innen liegende Hohlräume auf, sowie Herausführungen der Züge.

### Bezugszeichenliste:

- 100.: Erfindungsgemäßer Fahrradrahmen
- 1.: Steuerrohr
- 2.: Durch das Oberrohr geführter Zug
- 3.: Durch das Oberrohr geführter Zug im hinteren Bereich nach dem Austritt
- 4.: Durch das Unterrohr geführter Zug
- 5.: Lagerblock
- 6.: Oberrohr
- 7.: Unterrohr
- 8.: Gabelschaft
- 9.: Zwischenraum zwischen Gabelschaft und Steuerrohr
- 10,10: Eintrittsöffnungen von Zügen in das Steuerrohr
- 11.: Austrittsöffnung eines Zuges im Lagerblock

## Patentansprüche

1. Fahrradrahmen (100), der zumindest im Bereich des Steuerrohrs überwiegend aus Metall gefertigt ist, mit zumindest einem, zumindest teilweise innerhalb des Rahmens verlaufenden Zug (2, 4), **dadurch gekennzeichnet,**
**dass** zumindest ein Zug (2, 4) durch eine Durchbrechung des Steuerrohrs (10, 10') in den Rahmen (100) eingeführt ist und Position, Form und Größe von Steuerrohr (1) und Gabelschaft (8) so aufeinander abgestimmt sind, dass zwischen ihnen genug Platz (9) für den Zug (2, 4) verbleibt.

2. Fahrradrahmen (100) nach Anspruch 1, **dadurch gekennzeichnet, dass** der Innendurchmesser des Steuerrohres (1) um mindestens den doppelten Außendurchmesser des Zuges (2, 4) größer als der Außendurchmesser des Gabelschaftes (8) ist.

3. Fahrradrahmen (100) nach Anspruch 1 oder 2, **dadurch gekennzeichnet, dass** an dem Steuerrohr (1) durch das der mindestens eine Zug (2, 4) geführt ist, keine Anbauteile und keine Verformungen angeordnet sind, die den Zweck haben, die Führung dieses Zuges zu optimieren.

4. Fahrradrahmen (100) nach einem oder mehreren der Ansprüche 1 bis 3, **dadurch gekennzeichnet, dass** bei mehreren in das Steuerrohr eingeführten Zügen (2, 4) jeder Zug (2, 4) das Steuerrohr (1) durch eine eigene Öffnung (10, 10`) durchbricht.

5. Gefederter Fahrradrahmen (100), mit zumindest einem, zumindest teilweise innerhalb des Rahmens verlaufenden Zug (2, 4), **dadurch gekennzeichnet, dass** zumindest ein Zug (2, 4) durch eine Durchbrechung (11) durch ein auch der Federung dienendes Element (5) aus dem Rahmen heraus geführt ist.

6. Fahrradrahmen (100) nach Anspruch 5, **dadurch gekennzeichnet, dass** bei dem Element (5), Mittel vorgesehen sind, die eine weitestgehend krümmungsfreie Zugführung gewährleisten.

7. Fahrradrahmen (100) nach Anspruch 5 oder 6, **dadurch gekennzeichnet, dass** diese Mittel Zugherausführungen an dem Element (5), sowie die Anordnung von Hohlräumen in dem Element (5) umfassen.

8. Fahrradrahmen (100) nach einem oder mehreren der Ansprüche 5 bis 7, **dadurch gekennzeichnet, dass** das Element (5) ein Lagerblock (5) ist, der im hinteren Bereich an dem Oberrohr angeordnet ist.
